# EUROPEAN PATENT APPLICATION

(11) **EP 0 789 035 A2**
(43) Date of publication of application: **13.08.1997**
(21) Application number: 97101383.4
(22) Date of filing: 29.01.1997
(51) Int. Cl.: C08F 2/22, C08F 218/08, C08F 263/04

(54) **Emulsion polymer used as a packaging adhesive**

(30) Priority: 31.01.1996 US 594942
(71) Applicant: H.B. Fuller Licensing & Financing, Inc., St. Paul, Minnesota 55110-5132 (US)
(72) Inventor: Johnson, James N., North St. Paul, Minnesota 55109 (US); Arcand, Bernadette C., White Bear Lake, Minnesota 55110 (US)
(74) Representative: Maiwald, Walter, Dr. Dipl.-Chem.

(57) **Abstract**

Emulsion adhesives which give high mileage in preparing corewound packaging are prepared by a semi-batch process which includes the steps of:
a) charging the reactor with an aqueous solution of a colloidal stabilizer to which a mono-dispersed seed latex has been added, the seed latex having a volume average particle size of about 1.0-1.2 microns, and a population average particle size of about 0.7-0.8 microns as measured by Coulter Multisizing, and
b) feeding a vinyl monomer and an initiator into the reactor over a period of about 3-4 hours such that the final polymer emulsion volume average is about 2.0-2.5 microns and a population average size of about 1.0-1.2 microns with a standard deviation of both of about 0.4-0.6 microns as measured by Coulter Multisizing.

## Description

### Field Of The Invention

The present invention relates to a packaging adhesive that is used preferably in corewinding. Specifically, the present invention provides aqueous emulsion polymer compositions useful as adhesives and are made by a free radical polymerization of vinyl acetate monomer in a colloidal stabilized system.

### Background Of The Invention

The use of polymer emulsions as adhesives is a well known practice. Polymer emulsions which utilize colloidal stabilizers are particularly important as adhesives in the paper/packaging industries. The advantages of using colloidal stabilized polymer emulsions include wet tack and fast speed of set, which in turn allows for a faster packaging line speed. The process of preparing emulsion polymers from vinyl monomers to produce polymer lattices is also a well established technology. Lattices can be produced by using various processes that are well known in the industry to control the final properties of the resulting emulsion. Three major processes used in emulsion polymerization include continuous, semi-batch and batch.

In the continuous process, monomers and aqueous solutions of stabilizers and initiators are fed into the reactor at the same rate as final polymer emulsion is being pumped out. The semi-batch process generally is one in which monomer, initiator and optionally, stabilizer is fed into the reactor over time, allowing polymerization to occur gradually. Batch process is one in which, when all of the polymerization ingredients are charged to the reactor and the reaction is allowed to proceed at a defined rate to control exotherm. Semi-batch is a hybrid of batch and continuous processes.

Continuous processes are widely used to produce colloidal stabilized vinyl polymers that have been useful in the packaging industries. These are typically polyvinyl alcohol stabilized vinyl acetate homopolymers. Examples of these include those under the trade designations "PD-330" from H.B. Fuller Company (St. Paul, MN) and "Vinac XX-240" from Air Products (Allentown, PA). When used as packaging adhesives, continuous process homopolymers have functioned well. However, the packaging industries are always in need of polymer emulsions which are useful as adhesives and which provide improved bond strength at lower adhesive levels. These beneficial properties then lead to improved economy of use and higher mileage. Mileage is a test known in the composite can industry and is used to determine how many cans are produced from a known amount of adhesive. Emulsions resulting from batch processes are generally not used to produce colloidal stabilized vinyl acetate homopolymers because of the difficulties in controlling exotherm and controlling batch temperature reactivity. Semi-batch processes are widely used to produce colloidal stabilized polymers such as those described in U.S. Patent 3,827,996.

There is therefore, generally, a need for an adhesive as produced by a semi-batch process that provides good adhesive bond strength while substantially increasing the mileage of the adhesive.

### Summary Of The Invention

The present invention discloses a process for preparing aqueous polymer emulsion compositions that are generally useful as packaging adhesives and especially as corewinding adhesives and the adhesive compositions derived from this process. Generally, the process of the present invention is a semi-batch reaction where a seed latex is employed to promote the formation of a unique particle size and distribution in the polymer emulsion. It is believed that this unique particle size and bimodal distribution provides the essence of this invention. Advantageously, the present invention provides a good adhesive bond strength while increasing the mileage of the adhesive. Determination of mileage rates is known in the composite can industry by a specific test. The mileage test determines how many cans are produced from a known amount of adhesive. Preferably the process of this invention includes:
a) charging the reactor with an aqueous solution of a colloidal stabilizer, to which a mono-disperse seed latex has been added, the seed latex having a volume average particle size of about 1.0-1.2 microns and a population average particle size of about 0.7-0.8 microns as measured by Coulter Multisizing; and
b) feeding vinyl monomer and an initiator into the reactor over a period of about 3-4 hours such that the final polymer emulsion comprises a bimodal distribution having a volume average particle size of about 2.0-2.5 microns and a population average particle size of about 1.0-1.2 microns with a standard deviation for both of about 0.4-0.6 microns as measured by Coulter Multisizing.

This invention further discloses an aqueous polymer emulsion composition that includes an unique bimodal particle size distribution having a volume average particle size of about 2.0-2.5 microns, a population average particle size of about 1.0-1.2 microns, with a standard deviation of about 0.4-0.6 microns.

In the process of polymerizing the vinyl monomer of the present invention, the reaction process may include the addition of optional ingredients such as reducing agents, defoamers, chain transfer agents, pH buffers, preservatives as is standard in emulsion polymerization to achieve desirable properties.

### Brief Description Of The Drawings

Figure 1 is a plot of particle diameter versus population percentage for one embodiment of an emulsion prepared by the process of the invention.

Figure 2 is a plot of particle diameter versus volume percentage for the same emulsion depicted in Fig. 1.

### Detailed Description Of The Invention

The reaction mixture that provides a polyvinyl acetate latex useful as an adhesive,. is substantially the reaction product of vinyl monomer such as vinyl acetate polymer in a colloidal stabilized system in the presence of a seed latex which has a specific particle size. As is typical in emulsion polymerization, initiators, reducing agents in redox systems, pH buffers defoamers and preservatives are also added at various points in the process. Generally, the solids content of the polymer emulsion is adjusted to about 35-65 wt-%.

Protective colloids are used to stabilize the polymer emulsion during polymerization. Examples of protective colloids conventionally used, include cellulose ethers such as carboxymethyl cellulose and hydroxymethyl cellulose, polyvinyl alcohol, starch, dextrin, and others that are commonly known in the art. Particularly preferred is partially hydrolyzed polyvinyl alcohol (polyvinyl acetate which has been 85-92% hydrolyzed) because of its good machining property. Fully hydrolyzed and intermediate polyvinyl alcohol are also suitable. Low (15,000 - 35,000 number average MW), medium (35,000 - 70,000 number average MW), high (70,000 and above number average MW) molecular weight polyvinyl alcohol and mixtures thereof, may be used.

High molecular weight polyvinyl alcohols are more effective stabilizers and give better adhesion than lower molecular weight polyvinyl alcohol, but the low to medium molecular weight grades give lower solution viscosities and are therefore more appropriate for use in higher solids formulations. Therefore, a blend of low, medium and high molecular weight polyvinyl alcohols is preferred. The preferred concentration of the polyvinyl alcohol is about 0.5-10.0 wt-% of the polymer emulsion, more preferably in an amount of about 1-8 wt-% and most preferably in an amount of about 2-4 wt-% of the polymer emulsion.

It is believed that the seed latex that comprises a specific particle size will function as a nucleation site during the polymerization of the vinyl monomer thus leading to unique particle sizes in the final polymer emulsion. Generally, the seed latex will allow for the formation of large particles along with small particle size formation from nucleation sites on the polyvinyl alcohol. Thus, a bimodal distribution of the particles by size and relative amounts may be produced. The preferred seed latex should have an average size by volume of about 1.0-1.2 microns and an average size by population of about 0.7-0.8 microns as measured by a Coulter Multisizer from Coulter Electronics (Hilaeah, FL). An example of a suitable seed latex is "PD-366" from H.B. Fuller Company (St. Paul, MN). In preferred embodiments the seed latex is present in concentrations of about 15-35 parts of dry seed latex to 100 parts of monomer, more preferably in an amount of about 17-32 parts based on dry seed latex to 100 parts of monomer and most preferably in an amount of about 13-17 parts of dry seed latex to 100 parts of monomer.

The bimodal particle distribution of the emulsion produced by the process of the invention is observed when particle size diameter is plotted against the particle population or the particle volume. Particularly desirable emulsions of the invention have a bimodal particle distribution, a volume average size of about 2.0-2.5 microns, a population average size of about 1.0-1.2 microns and a standard deviation of both of about 0.4-1.2 microns as measured by Coulter Multisizing. The particle size distribution is bimodal by number where the particle sizes of the smaller sized node is generally about 0.5-1.0 microns and the larger node is generally about 2-4 microns. The relative ratios of the volumes of the two nodes can vary from about 1-2 and 2-1 respectively.

Examples of suitable vinyl monomers include but are not limited to: vinyl and maleate esters such as vinyl acetate, vinyl propionate, dibutyl maleates, vinyl formate, and the like. Other vinyl monomers include acrylate esters, such as butyl acrylate, 2-ethylhexylacrylate, methyl acrylate and the corresponding methacrylate esters and mixtures thereof. The vinyl monomer of the present invention is present in a concentration of about 20-50 % based on the total polymer emulsion. More preferably is a concentration of about 25-45 % based on polymer emulsion and most preferably is a concentration of about 35-40 % based on polymer emulsion.

Initiators that are useful in the present invention are those that are commonly used in the art such as one sold under the trade name "TBHP-70" from Pennwalt Inc. (Buffalo, NY). Initiators are generally used as catalysts in emulsion polymerization reactions. Examples of such initiators are the persulfate salts of ammonium, potassium and sodium, hydrogen peroxide and terbutyl hydroperoxide. In a preferred composition, the initiator is present in concentrations of about 0.1-2 wt-% based on total polymer emulsion, more preferably in an amount of about 0.1-0.3 wt-% and most preferably in an amount of about 0.1-0.2 wt-% of the total polymer emulsion.

Reducing agents can be used in conjunction with the initiators in the present invention to facilitate improved reactivity during polymerization, particularly at lower batch temperatures. Typical reducing agents include, but are not limited to, sodium formaldehyde sulfoxylate, sold under the trade name of "Hydrosulfite AWC" from Henkel Corporation (Ambler, PA), sodium bisulfite, sodium erythorbate and the like. In the preferred composition, the amount of reducing agent is present in an amount of about 0.1-0.5 wt-% of the total polymer emulsion, in a most preferable composition in an amount of about 0.1-0.3 wt-%.

Defoamers are also utilized as an optional ingredient in the present invention to facilitate foam reduction and to improve machining characteristics. A variety of defoamers can be used in the present invention and are typically well known in the adhesive industry. Defoamers that can be used include those under the trade designation, "Bubble Breaker 748" from Witco, Inc. (Houston, TX), and "Foammaster" from Henkel Corp (Ambler, PA). The compositions of the present invention contain defoamer in an amount of about 0.1-0.5 wt-% of the total polymer emulsion and in a most preferable embodiment in an amount of about 0.1-0.3 wt-%.

The final pH of the polymer emulsion and the in-process pH can be controlled by the use of buffers. There are a range of suitable buffers, such as sodium bicarbonate that are known in the industry and which can be used in the present invention. Preferred amounts that are useful in the present invention are in amounts of about 0-.75 wt-% of the total polymer emulsion and most preferably in an amount of about 0.1-0.2 wt-% so than the final emulsion is at a pH level of about 4-5.

Preservatives can also be used in the polymer emulsion compositions of the present invention. In polymer emulsions, preservatives are generally used to protect the compositions from degradation from micro-organisms. As micro-organisms grow in these types of compositions, foul odors are generated, there is discoloration of the composition and the viscosity is lowered. It is therefore useful to utilize a preservative to prevent these adverse affects. Known preservatives include those under the trade designation "Kathon LX 1.5%" from Rohm & Haas (Philadelphia, PA) and "Proxel GXL" from Zeneca (Wilmington, DE). The preferred amount of preservative used in the present invention is about 0.1-0.5 wt-% of the total polymer emulsion and most preferably in an amount of about 0.1-0.3 wt-%.

Although the ingredients used in the present invention may have been characterized as useful for specific functions, it should be understood that these ingredients are not limited to their typical functions and therefore can be useful for other purposes that provide desirable properties to the resulting polymer emulsion.

### Examples

The following examples are offered to further illustrate the various aspects and attributes of the present invention. They are, however, not intended to limit the scope of the present invention.

Examples 1-4 were processed in exactly the same manner. The process was as follows:
A) In a clean reactor the following were initially charged:
   1) Deionized water and Bubble Breaker 748, a defoamer.
   2) With good agitation, Airvol 823 and Airvol 205, protective colloids from Air Products were added. Airvol 823 is a medium molecular weight Polyvinyl Alcohol (PVOH) product and Airvol 205 is a low molecule weight PVOH product. The batch temperature was increased to 85° C and held for 45 minutes; and
   3) Seed polymer PD-0366 from H.B. Fuller Company was charged to the reactor and the batch was then cooled to 67° C.
B) To the monomer addition tank, the monomer feed was charged.
C) To the catalyst tank, the delayed catalyst feed consisting of deionized water and an initiator, ammonium persulfate was charged.
D) To the reducer tank, the delayed reducer which comprises deionized water and Hydrosulfite AWC, a reducing agent, was charged.
E) With the batch temperature at 67° C, initial oxidizer/initiator ammonium persulfate was added after being dissolved in deionized water, and then the initial reducer Hydrosulfite AWC was dissolved in deionized water and then added to the reactor.
F) The monomer and catalyst feed began immediately according to the following schedule:
   1) Monomer was fed for 3 hours, beginning at a very slow rate (about 4% of monomer over 15 minutes) and gradually increased as batch temperature increased. High agitation was maintained.
   2) Delayed oxidizer and delayed reducer were fed for 3.75 hours into the reactor at a uniform rate.
   3) The batch temperatures were allowed to increase to 80-85°C through exotherm and by increasing jacket temperature. This temperature was maintained throughout the feeds.
G) When the monomer feed was completed, the line was flushed with deionized water and pumped into the reactor.
H) When the catalyst and reducer feeds were completed, the batch was cooled to 65° C and 3 treats were added. (1/3 TBHP-70, an initiator from PennWalt (Buffalo, NY), then 1/3 reducing agent Sodium Erythorbate from Ches Pfizer & Co. (New York, NY), dissolved in 1/3 of deionized water.) The treats were added 10 minutes apart and held at 65° C for an additional 10 minutes.
I) Cooled to ambient temperature, and with good agitation adjusted pH to 4.5 with bicarbonate solution which is made up of sodium bicarbonate in deionized water. Bubble Breaker 748 and Kathon LX were then added. In example 1, another ingredient was added, i.e., Benzoflex 50, a plasticizer from Velsicol (Chicago, IL).
J) Adjusted the specifications with deionized water and filtered through a fine mesh sock.

### Example 1

| **Raw Material** | **Weight Percent Of The Polymer Emulsion** |
|---|---|
| Water, Deionized | 40.3896 |
| Bubble Breaker 748 | 0.0277 |
| Airvol 823 PVOH | 1.9310 |
| Airvol 205 PVOH | 0.8395 |
| PD-0366 Fine PS PVAC Homop. Emulsion | 9.1511 |
| Vinyl Acetate 3-7 PPM HQ | 32.1546 |
| Water, Deionized | 0.2771 |
| Ammonium Persulfate | 0.0176 |
| Water, Deionized | 0.2771 |
| Hydrosulfite AWC | 0.0092 |
| Water, Deionized | 4.2145 |
| Ammonium Persulfate | 0.1654 |
| Water, Deionized | 4.3069 |
| Hydrosulfite AWC | 0.0915 |
| TBHP-70 | 0.0756 |
| Water, Deionized | 0.1511 |
| Sodium Erythorbate | 0.0546 |
| Water, Deionized | 1.3097 |
| Water, Deionized | 0.9907 |
| Sodium Bicarbonate | 0.1427 |
| Bubble Breaker 748 | 0.0638 |
| Kathon LX 1.5% Biocide | 0.1763 |
| Benzoflex 50 Plasticizer | 2.0000 |
| Water, Deionized | 1.1827 |

The polymer emulsion is characterized by a solid content of 40% of the polymer emulsion and a volume average particle size of 2.0 - 2.5 microns and a population average particle size of 1.0 - 1.2 microns with a standard deviation for both of 0.4 - 0.6 microns.

### Example 2

| **Raw Material** | **Weight Percent Of The Polymer Emulsion** |
|---|---|
| Water, Deionized | 27.9015 |
| Bubble Breaker 748 | 0.0298 |
| Airvol 823 PVOH | 1.3228 |
| Airvol 205 PVOH | 1.7346 |
| PD-0366 Fine PS PVAC Homop. Emulsion | 16.5354 |
| Vinyl Acetate 3-7 PPM HQ | 37.4804 |
| Water, Deionized | 0.2976 |
| Ammonium Persulfate | 0.0198 |
| Water, Deionized | 0.2976 |
| Hydrosulfite AWC | 0.0099 |
| Water, Deionized | 4.6410 |
| Ammonium Persulfate | 0.1874 |
| Water, Deionized | 4.7512 |
| Hydrosulfite AWC | 0.0992 |
| TBHP-70 | 0.0330 |
| Water, Deionized | 0.1654 |
| Sodium Erythorbate | 0.0265 |
| Water, Deionized | 1.1024 |
| Water, Deionized | 0.9804 |
| Sodium Bicarbonate | 0.1543 |
| Bubble Breaker 748 | 0.0706 |
| Kathon LX 1.5% Biocide | 0.1984 |
| Water, Deionized | 1.9608 |

The polymer emulsion is characterized by a solid content of 50% of the polymer emulsion and a volume average particle size of 2.0 - 2.5 microns and a population average particle size of 1.0 - 1.2 microns with a standard deviation for both of 0.4 - 0.6 microns.

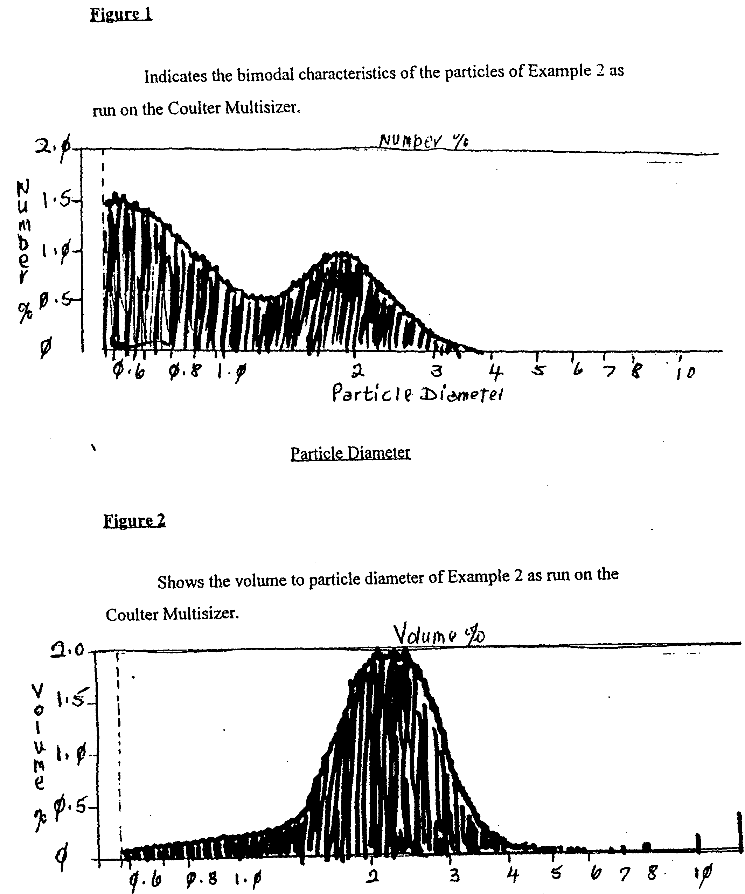

The bimodal distribution of the emulsion prepared in this example is evident from Figures 1 and 2. In Figure 1 the particle diameter of the emulsion has been plotted against population. In Figure 2 the particle diameter has been plotted against volume. Both plots were obtained using a Coulter Multisizer.

### Example 3

| **Raw Material** | **Weight Percent Of The Polymer Emulsion** |
|---|---|
| Water, Deionized | 27.9015 |
| Bubble Breaker 748 | 0.0298 |
| Airvol 823 PVOH | 1.3245 |
| Airvol 205 PVOH | 1.7329 |
| PD-0366 Fine PS PVAC Homop. Emulsion | 16.5354 |
| Vinyl Acetate 3-7 PPM HQ | 33.0710 |
| Dibutyl Maleate | 4.4094 |
| Water, Deionized | 0.2976 |
| Ammonium Persulfate | 0.0198 |
| Water, Deionized | 0.2976 |
| Hydrosulfite AWC | 0.0099 |
| Water, Deionized | 4.6410 |
| Ammonium Persulfate | 0.1874 |
| Water, Deionized | 4.7512 |
| Hydrosulfite AWC | 0.0992 |
| TBHP-70 | 0.0330 |
| Water, Deionized | 0.1654 |
| Sodium Erythorbate | 0.0265 |
| Water, Deionized | 4.1228 |
| Sodium Barcarbonate | 0.1543 |
| Bubble Breaker 748 | 0.0706 |
| Kathon LX 1.5% Biocide | 0.1984 |

The polymer emulsion is characterized by a solid content of 50% of the polymer emulsion and a volume average particle size of 2.0 - 2.5 microns and a population average particle size of 1.0 - 1.2 microns with a standard deviation for both of 0.4 - 0.6 microns.

### Example 4

| **Raw Material** | **Weight Percent Of The Polymer Emulsion** |
|---|---|
| Water, Deionized | 41.3896 |
| Bubble Breaker 748 | 0.0277 |
| Airvol 823 PVOH | 1.9310 |
| Airvol 205 PVOH | 0.8395 |
| PD-0366 Fine PS PVAC Homop. Emulsion | 9.1511 |
| Vinyl Acetate 3-7 PPM HQ | 32.1546 |
| Water, Deionized | 0.2771 |
| Ammonium Persulfate | 0.0176 |
| Water, Deionized | 0.2771 |
| Hydrosulfite AWC | 0.0092 |
| Water, Deionized | 4.2145 |
| Ammonium Persulfate | 0.1654 |
| Water, Deionized | 4.3069 |
| Hydrosulfite AWC | 0.0915 |
| TBHP-70 | 0.0756 |
| Water, Deionized | 0.1511 |
| Sodium Erythorbate | 0.0546 |
| Water, Deionized | 1.3097 |
| Water. Deionized | 3.1734 |
| Sodium Barcarbonate | 0.1427 |
| Bubble Breaker 748 | 0.0638 |
| Kathon LX 1.5% Biocide | 0.1763 |

The polymer emulsion is characterized by a solid content of 40% of the polymer emulsion and a volume average particle size of 2.0 - 2.5 microns and a population average particle size of 1.0 - 1.2 microns with a standard deviation for both of 0.4 - 0.6 microns.

### Example 5 - Mileage Test

The mileage test was conducted to determine how much of an improvement in mileage could be obtained when comparing adhesives under similar conditions. The test is described as follows:
1) A production can winder was used to make composite can bodies under identical plant conditions.
2) A minimum of 10 gallons of adhesive was used for each test. Ten gallon test results are typically confirmed using larger quantities.
3) With the can winder at standard conditions, each sample was put in the adhesive tray and metered down to a point where a minimum amount of adhesive was used to obtain good bonding and crush strengths.
4) The number of cans per pound of adhesive was determined by weighing the adhesive used and checking the counter on the tube winder to check number of cans produced.
5) A control adhesive, "PD-330" was used every time a test was conducted. This adhesive is representative of the current state of the art of adhesives for use in preparing corewound can bodies.

Table I below indicates the comparison of a control sample "PD-330" with Examples 1, 2 and 4.

**TABLE 1**

| **EXAMPLES** | **% INCREASED MILEAGE** | **INCREASED BOND STRENGTH** |
|---|---|---|
| | | |
| Example 1 | 50% | NO |
| Example 2 | 50% | YES |
| Example 4 | 37% | NO |

## Claims

1. A semi-batch process for preparing an aqueous emulsion polymer, the process comprising the steps of:
(a) Charging the reactor with an aqueous solution of a colloidal stabilizer to which a mono-dispersed seed latex has been added, the seed latex having a volume average particle size of about 1.0-1.2 microns, and a population average particle size of about 0.7-0.8 microns as measured by Coulter Multisizing; and
(b) feeding a vinyl monomer and an initiator into the reactor over a period of about 3-4 hours such that the final polymer emulsion volume average size of about 2.0-2.5 microns and a population average size of about 1.0-1.2 microns with a standard deviation of about 0.4-0.6 microns as measured by Coulter Multisizing.

2. The process of claim 1 wherein the vinyl monomer is vinyl acetate.

3. The process of claim 1 wherein the initiator is the persulfate salt of ammonium, potassium or sodium.

4. A semi-batch process, the process comprising the steps of:
(a) charging the reactor with an aqueous solution of colloidal stabilizer in an amount of about 0.5%-10.0 wt-%, to which a mono-dispersed seed latex having a volume average particle size of about 1.0-1.2 microns, as measured by Coulter Multisizing in an amount of about [15-35% based on monomer content] 15-35 parts of dry seed latex to 100 parts of monomer;
and
(b) feeding a vinyl monomer in an amount of about 20-50% based on the total polymer emulsion and an initiator in an amount of about 0.1-0.3 wt-% that is based on the total polymer emulsion.

5. The process of Claims **1** or **4**, wherein the seed latex is polyvinyl acetate.

6. The process of Claims **1** or **4**, wherein the polyvinyl acetate is present in an amount of about 17-32 parts of dry seed latex to 100 parts of monomer.

7. The process of Claims **1** or **4**, wherein the colloidal stabilizer is polyvinyl alcohol.

8. The process of Claim 7, wherein the polyvinyl alcohol is present in an amount of about 2-4 wt-% of the total polymer emulsion.

9. The polymer emulsion of Claims **1** or **4**, wherein the solids content is about 35-65 wt-% of the total polymer emulsion.

10. The polymer emulsion produced by the process of Claims 1 or 4, wherein the distribution of the particle sizes is bimodal.

11. An aqueous emulsion polymer, having a bimodal particle size distribution, comprising the free radically polymerized product of:
(a) at least one free radical initiator;
(b) at least one vinyl monomer;
(c) at least one colloidal stabilizer; and
(d) a polyvinyl acetate seed latex having a volume average particle size of about 1.0 micron to about 1.2 microns and population average particle size of about 0.7 microns to about 0.8 microns;
Wherein said emulsion polymer is characterized as having a volume average size ranging from about 2.0 microns to about 2.5 microns and a population average size ranging from about 1.0 micron to about 1.2 microns.
